# EUROPÄISCHE PATENTANMELDUNG

(11) **EP 1 632 121 A1**
(43) Veröffentlichungstag der Anmeldung: **08.03.2006**
(21) Anmeldenummer: 05018638.6
(22) Anmeldetag: 27.08.2005
(51) Int. Cl.: A01C 7/04

(54) **Vorrichtung zum Abstreifen von überschüssigen Samenkörnern**

(30) Priorität: 02.09.2004 DE 102004042519
(71) Anmelder: Amazonen-Werke H. Dreyer GmbH & Co. KG, 49205 Hasbergen (DE)
(72) Erfinder: Johannaber, Stefan Jan, 49536 Lienen (DE)

(57) **Zusammenfassung**

Vorrichtung zum Abstreifen von überschüssigen Samenkörnern von den in einer rotierenden Trommel oder Scheibe angebrachten und mit einem Druckunterschied beaufschlagten Aussaatöffnungen einer Einzelkornsämaschine, wobei die Aussaatöffnungen in zumindest einer Reihe angeordnet sind, wobei jeder Reihe von Aussaatöffnungen zumindest ein um eine Achse rotierender und an der Trommel oder Scheibe im Bereich der Aussaatöffnungen zumindest teilweise anliegender Abstreifer zugeordnet ist. Um die Abstreiferanordnung bei auf einer Abstreiferachse drehbar angeordneten Abstreiferelemente sicher und kontinuierlich zu gewährleisten ist vorgesehen, dass die zur Abstreiferachse rechtwinklig sich befindende Rotationsfläche des Abstreifers in einem Winkel von 5° bis 45°, vorzugsweise 15° zur Trommel- oder Scheibenfläche angeordnet ist.

## Beschreibung

Die Erfindung eine Vorrichtung gemäß des Oberbegriffes des Patentanspruches 1.

Eine derartige Vorrichtung ist in der FR 23 94 975 A1 beschrieben. Die dort beschriebene Einzelkornsämaschine weist eine in einem Gehäuse drehbar gelagerte Vereinzelungsscheibe mit einem Druckunterschied beaufschlagte Aussaatöffnungen auf, an denen sich bei der Durchführung durch einen Saatgutvorrat Samenkörner anlagern. In Drehrichtung der Scheibe gesehen ist hinter dem Saatgutvorrat eine Abstreifvorrichtung zum Abstreifen von überschüssigen Samenkörnern angeordnet, welche mehrere an einem einstellbaren Hebel gelagerte und um eine Achse frei drehbar angeordnete Abstreifer angeordnet. Die Abstreiferachse ist senkrecht zur Scheibenachse angeordnet, so dass die Abstreiferfläche in planer Weise ganzflächig auf der Scheibenfläche anliegt. Aufgrund der planen Anlage der Abstreiferfläche wird die Rotation des Abstreifers behindert bzw. gebremst.

Der Erfindung liegt die Aufgabe zugrunde, die Drehbarkeit der auf einer Abstreiferachse drehbar angeordneten Abstreiferelemente sicher und kontinuierlich zu gewährleisten.

Diese Aufgabe wird erfindungsgemäß durch das kennzeichnende Merkmal des Patentanspruches 1 gelöst. Infolge dieser Maßnahme wird erreicht, dass der Abstreifer mit seiner Abstreiferfläche bzw. nur mit seinem Rand der Kreisfläche des Abstreifers nur an einer bestimmten Stelle bzw. auf nur einem Teilbereich des Randes des Abstreifers auf der Vereinzelungstrommel oder -Scheibe anliegt. Hierdurch wird eine kontinuierliche und sichere Drehung des Abstreifers in Abhängigkeit der Drehung der Trommel oder Scheibe erreicht.

In vorteilhafter Weise ist der Abstreifer derart angeordnet, dass der Abstreifer nur mit seiner den Aussaatöffnungen am nächsten liegenden Teilbereich der Rotationsfläche die Trommel oder Scheibe berührt.

Eine einfache Ausgestaltung des Abstreifers lässt sich dadurch erreichen, dass der Abstreifer tellerförmig ausgebildet ist. Als besonders vorteilhaft hat sich herausgestellt, wenn der Abstreiferteller auf seiner der Trommel oder Scheibe zugewandten Seite konkav ausgebildet ist.

Um sicherzustellen, dass die Abstreifer sich der Kontur der Scheibe oder Trommel anpassen können, ist vorgesehen, dass die Abstreifer aus einem gummielastischen Material, wie beispielsweise Polyurethan bestehen.

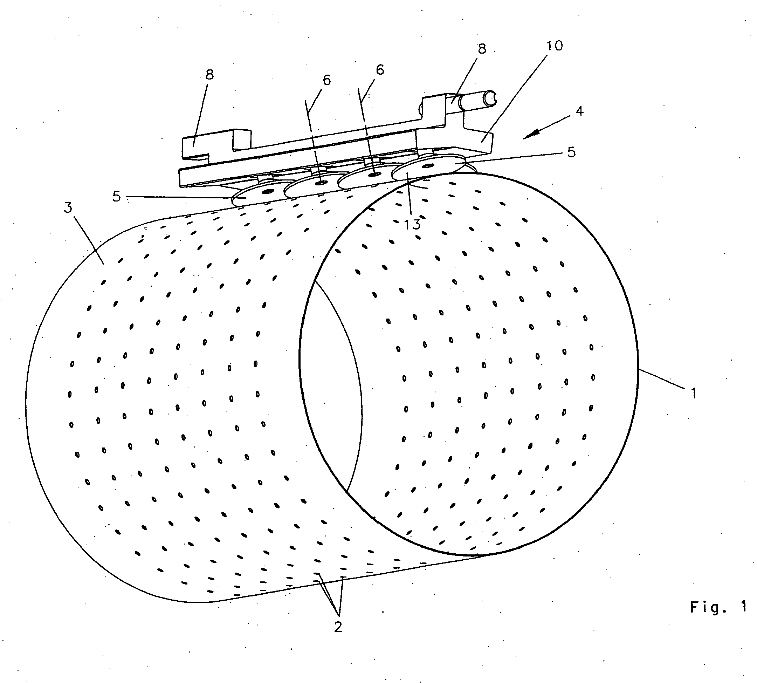

Weitere Einzelheiten der Erfindung sind den übrigen Unteransprüchen, der Beispielsbeschreibung und den Zeichnungen zu entnehmen. Hierbei zeigen
- Fig. 1: das als rotierende Trommel ausgebildete Vereinzelungsorgan mit zugeordneter Absteifereinrichtung in perspektivischer Darstellung,

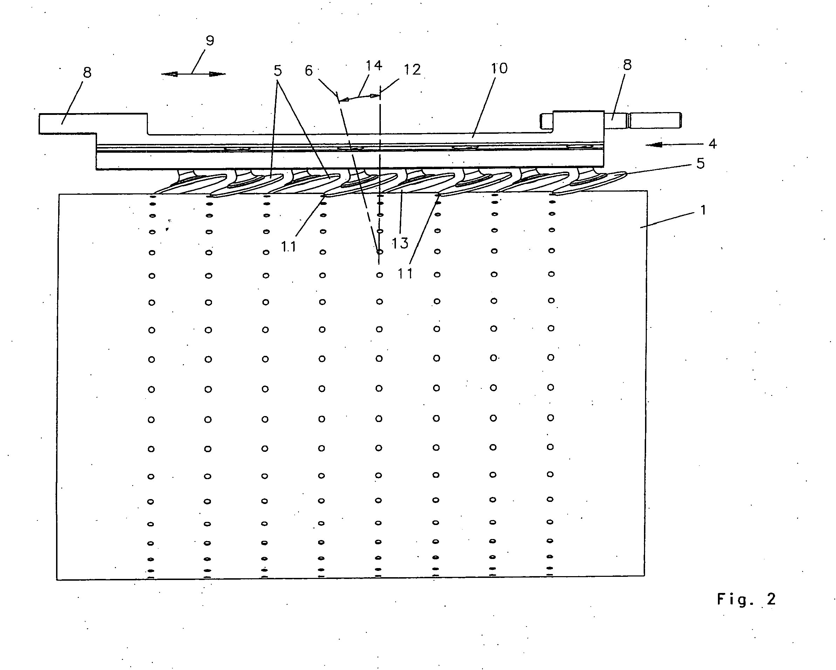

- Fig. 2: die Vereinzelungstrommel mit Abstreifervorrichtung in Vorderansicht,

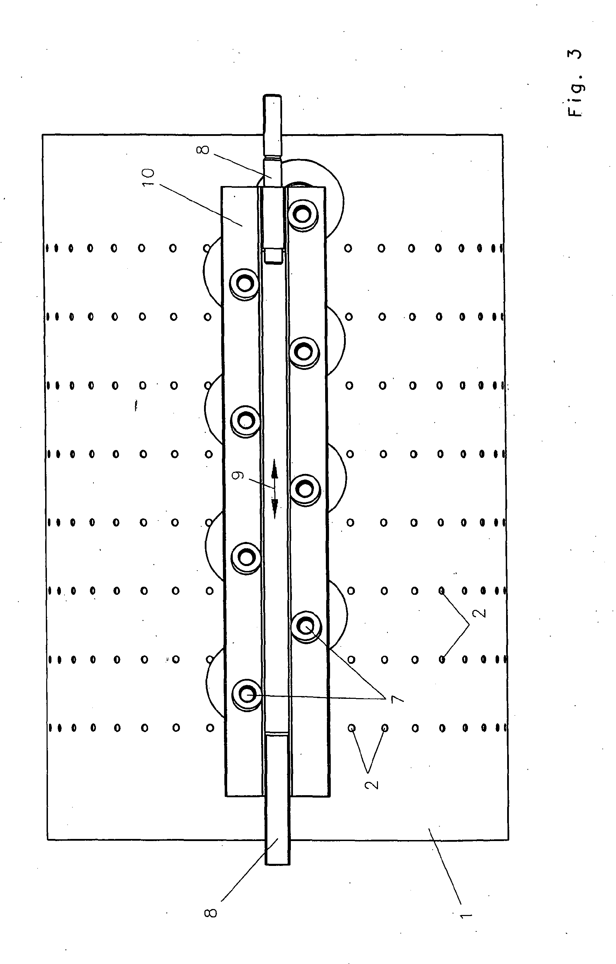

- Fig. 3: die Vereinzelungstrommel mit Abstreifereinrichtung in der Draufsicht,

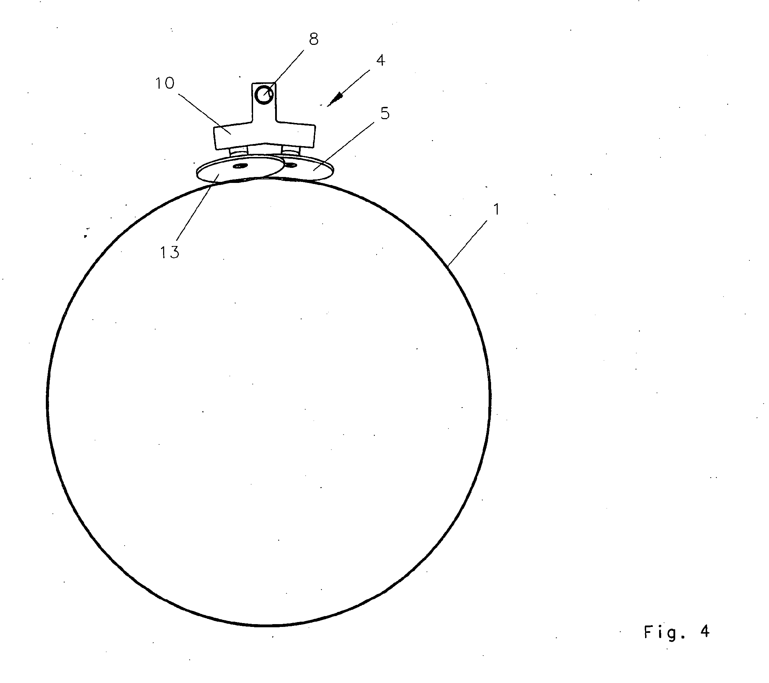

- Fig. 4: die Vereinzelungstrommel mit Abstreifervorrichtung in Seitenansicht und

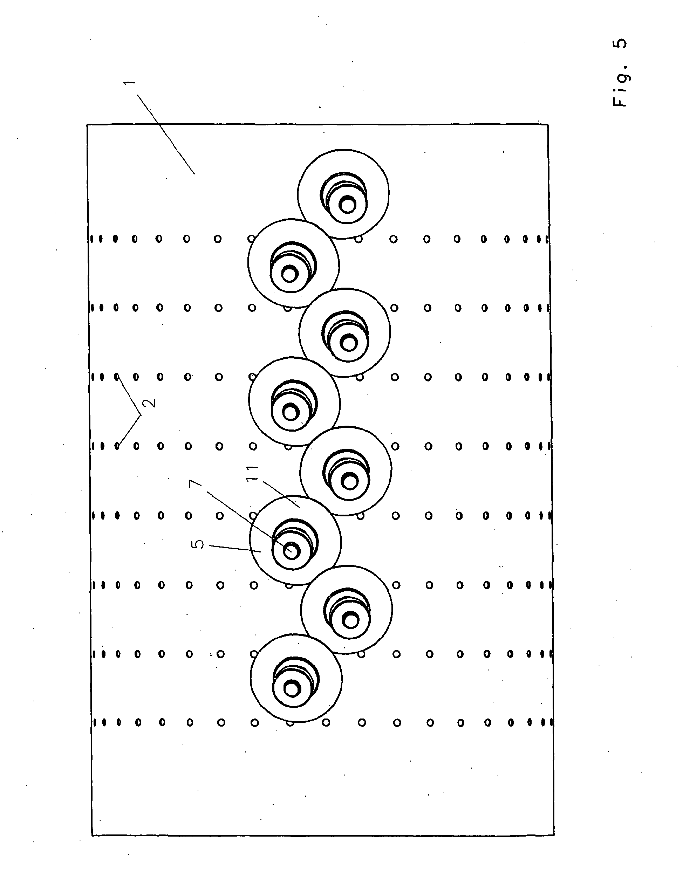

- Fig. 5: die Vereinzelungstrommel mit nicht dargestelltem Halter der Abstreifereinrichtung in der Draufsicht.

Die als Vereinzelungstrommel 1 ausgebildete Vereinzelungseinrichtung ist in einem nicht dargestellten Gehäuse angeordnet und drehbar gelagert. Der Vereinzelungstrommel 1 ist ein nicht dargestellter Vorratsbehälter und eine Luftdruckerzeugungseinrichtung in zugeordnet. In der Trommel 1 sind Aussaatöffnungen 2 angeordnet, an welche sich auf der Außenseite 3 der Trommel 1 bei Durchführung durch einen sich im Vorratsbehälters befindenden Saatgutvorrat sich Samenkörner aufgrund des Druckunterschiedes anlagern. Entweder wird auf der Innenseite der Trommel 1 ein Unterdruck erzeugt oder auf der Außenseite der Trommel 1 ein Überdruck, so dass sich die Samenkörner auf der Außenseite 3 der Trommel 1 an den Aussaatöffnungen 2 aufgrund des erzeugten Druckunterschiedes anlagern.

Im oberen Bereich der Trommel 1 ist auf deren Außenseite 3 die Abstreifereinrichtung 4 angeordnet. Jeder Reihe von Aussaatöffnungen 2 ist ein Abstreifer 5 der Abstreifereinrichtung 4 zugeordnet. Die Abstreifer 5 sind als um eine Achse 6 frei drehbare tellerförmige Abstreiferelemente ausgebildet. Die Abstreifer 5 bestehen aus einem gummielastischen Material, wie beispielsweise Polyurethan. Die Abstreifer 5 sind tellerförmig ausgebildet. Der Abstreiferteller 5 ist auf ihrer der Trommel 1 zugewandten Seite konkav ausgebildet. Die Abstreiferteller 5 sind jeweils auf einer Welle 7 frei drehbar gelagert. Diese Wellen 7 sind an dem in dem Gehäuse der Sämaschine mittels der Schiebelagerung 8 in Pfeilrichtung 9 hin und her verschiebbar gelagerten Tragbalken, so dass die Lage der Abstreiferkante 11 der Abstreiferteller zu den Aussaatöffnungen 2 und entsprechend der gewünschten Abstreifwirkung einstellbar sind. Die Wellen 7, auf der die Abstreiferteller gelagert sind, und somit die Drehachse 6, um die sich die Teller drehen, sind schräg zu einer senkrecht auf die Trommel 1 aufstehenden Ebene 12 angeordnet. Hierbei ist die zur Abstreiferachse 6 rechtwinklig sich befindende Rotationsfläche 13 des Abstreifertellers 5 in einem Winkel 14 vom 5° bis 45°, vorzugsweise 15° zur Trommel- oder Scheibenfläche angeordnet. Somit berührt der Abstreifer 5 nur mit seiner den Aussaatöffnungen 2 am nächsten liegenden Teilbereich seiner Rotationsfläche 13 die Trommel 1. Aufgrund des nur teilweise aufgrund seiner Schrägstellung an der Trommelfläche anliegenden Abstreifertellers 5 wird eine gleichmäßige und ungebremste Drehung des Abstreifertellers und somit eine gute und gleichmäßige Abstreifwirkung erreicht.

## Patentansprüche

1. Vorrichtung zum Abstreifen von überschüssigen Samenkörnern von den in einer rotierenden Trommel oder Scheibe angebrachten und mit einem Druckunterschied beaufschlagten Aussaatöffnungen einer Einzelkornsämaschine, wobei die Aussaatöffnungen in zumindest einer Reihe angeordnet sind, wobei jeder Reihe von Aussaatöffnungen zumindest ein um eine Achse rotierender und an der Trommel oder Scheibe im Bereich der Aussaatöffnungen zumindest teilweise anliegender Abstreifer zugeordnet ist, **dadurch gekennzeichnet, dass** die zur Abstreiferachse (6) rechtwinklig sich befindende Rotationsfläche (13) des Abstreifers (5) in einem Winkel (14) von 5° bis 45°, vorzugsweise 15° zur Trommel- oder Scheibenfläche angeordnet ist.

2. Vorrichtung zum Abstreifen nach Anspruch 1, **dadurch gekennzeichnet, dass** der Abstreifer (5) nur mit seiner den Aussaatöffnurigen (2) am nächsten liegenden Teilbereich der Rotationsfläche (13) die Trommel (1) oder Scheibe berührt.

3. Vorrichtung zum Abstreifen nach Anspruch 1, **dadurch gekennzeichnet, dass** der Abstreifer (5)tellerförmig ausgebildet ist.

4. Vorrichtung zum Abstreifen nach Anspruch 3, **dadurch gekennzeichnet, dass** der Abstreiferteller (5) auf seiner der Trommel (1) oder Scheibe zugewandten Seite konkav ausgebildet sind.

5. Vorrichtung nach einem oder mehreren der vorstehenden Ansprüche, **dadurch gekennzeichnet, dass** die Abstreifer (5) aus einem gummielastischen Material, wie beispielsweise Polyurethan bestehen.
